# EUROPEAN PATENT APPLICATION

(11) **EP 4 797 028 A1**
(43) Date of publication of application: **26.08.2026**
(21) Application number: 23955871.1
(22) Date of filing: 07.11.2023
(51) Int. Cl.: G05D 1/43, E01H 5/08, A47L 11/40, A47L 11/24

(54) **METHOD AND APPARATUS FOR RESUMING CLEANING FROM INTERRUPTION POINT, AND SELF-MOVING DEVICE AND STORAGE MEDIUM**

(30) Priority: 20.10.2023 CN 202311375711
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHENG, Chuwei, Shenzhen, Guangdong 518000 (CN)
(74) Representative: Abel & Imray LLP
(86) International application number: PCT/CN2023/130119
(87) International publication number: WO 2025/081553

(57) **Abstract**

A method and apparatus for resuming cleaning from an interruption point, and a self-moving device and a storage medium. The method comprises: when a self-moving device executes a cleaning operation on a preset region on the basis of a preset path, if it is detected that a preset interruption point problem has been triggered, acquiring a non-operating path, which is recorded by the self-moving device at a previous regular record time point; acquiring an interruption point position point in the preset path that corresponds to the self-moving device when the preset interruption point problem has been triggered; and after a cleaning-resuming instruction is received, controlling the self-moving device to move to a target position point and start from the target position point executing a first cleaning-resuming operation on the preset region on the basis of the non-operating path.

## Description

### CROSS-REFERENCE TO RELATED APPLICATIONS

This application claims the priority of a Chinese patent application filed with the CNIPA on October 20, 2023, with Application No. 202311375711.2 and entitled "METHOD AND APPARATUS FOR RESUMING CLEANING FROM INTERRUPTION POINT, AND SELF-MOVING DEVICE AND STORAGE MEDIUM", the entire contents of which are incorporated herein by reference.

### TECHNICAL FIELD

This application relates to the field of self-cleaning technology for self-moving devices, and in particular, to a method and apparatus for resuming cleaning from an interruption point, and a self-moving device and a storage medium.

### BACKGROUND

Currently, with the gradual development of society, self-moving devices such as courtyard robots or snow-clearing device robots play an important role in people's lives, as they can effectively reduce human workload and improve work efficiency. However, during actual use, the aforementioned self-moving devices may all stop work at an interruption point in a preset operating path for various reasons (such as power failure, malfunction, or insufficient battery power). The inventors have realized that when resuming operation from an interruption point, the position of the self-moving device may have moved or the self-moving device may return to the initial cleaning point in the preset operating path. Consequently, when starting to resume cleaning work, the workload of the self-moving device may be increased due to repeated cleaning of regions that have already been cleaned, thereby reducing its cleaning efficiency (for example, some self-moving devices will return to the initial cleaning point to start cleaning all over again), or the cleaning effect may be poor due to the existence of missed cleaning regions.

### SUMMARY

The embodiments of this application provide a method and apparatus for resuming cleaning from an interruption point, and a self-moving device and a storage medium to solve the technical problems of low cleaning efficiency and poor cleaning effect existing in the cleaning-resuming operation from an interruption point of self-moving devices in the prior art.

A method for resuming cleaning from an interruption point includes:
when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path;
acquiring an interruption point position point in the preset path that corresponds to the self-moving device when the preset interruption point problem has been triggered; and
after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

A self-moving device includes a traveling device, a cleaning device, and a controller, the controller including a memory, a processor, and computer-readable instructions stored in the memory and executable on the processor, wherein when the processor executes the computer-readable instructions, the processor controls the traveling device and the cleaning device to implement the following steps:
when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path;
acquiring an interruption point position point in the preset path that corresponds to the self-moving device when the preset interruption point problem has been triggered; and
after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

A computer-readable storage medium having stored thereon computer-readable instructions that, when executed by a processor, cause the processor to perform the following steps:
when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path;
acquiring an interruption point position point in the preset path that corresponds to the self-moving device when the preset interruption point problem has been triggered; and
after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

This application provides a method and apparatus for resuming cleaning from an interruption point, and a self-moving device and a storage medium. The method includes: when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path; acquiring an interruption point position point in the preset path that corresponds to the self-moving device when the preset interruption point problem has been triggered; and after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

In this application, the non-operating path is regularly recorded at a preset time interval, and when a preset interruption point problem is triggered, a corresponding interruption point position point in the preset path when the preset interruption point problem has been triggered is determined in real time. Afterwards, a target position point can be determined on the basis of the interruption point position point and the non-operating path, and then a first cleaning-resuming operation is executed on a preset region on the basis of the target position point and according to the non-operating path. This avoids repeated cleaning of the preset region during the cleaning-resuming operation (such as the first cleaning-resuming operation), and there will be no missed regions, which improves the intelligence of the cleaning process, saves cleaning time, and also greatly improves cleaning efficiency and effectiveness.

Details of one or more embodiments of the present application are set forth in the following drawings and description, and other features and advantages of the present application will become apparent from the specification, the drawings, and the claims.

### BRIEF DESCRIPTION OF DRAWINGS

In order to more clearly explain the technical solutions of the embodiments of the present application, the accompanying drawings required to be used in the description of the embodiments of the present application will be briefly introduced below. Obviously, the accompanying drawings in the following description are merely some embodiments of the present application, and for those of ordinary skill in the art, other accompanying drawings can also be obtained from these accompanying drawings without creative work.
FIG. 1 is a flowchart of a method for resuming cleaning from an interruption point in an embodiment of the present application;
FIG. 2 is a schematic block diagram of an apparatus for resuming cleaning from an interruption point in an embodiment of the present application; and
FIG. 3 is a schematic diagram of a controller in an embodiment of the present application.

### DETAILED DESCRIPTION OF THE INVENTION

Hereinafter, the technical solutions in the embodiments of the present application will be clearly and completely described in conjunction with the accompanying drawings in the embodiments of the present application. Obviously, the described embodiments are some, but not all, of the embodiments of the present application. On the basis of the embodiments in the present application, all other embodiments obtained by those of ordinary skill in the art without creative work fall within the protection scope of the present application.

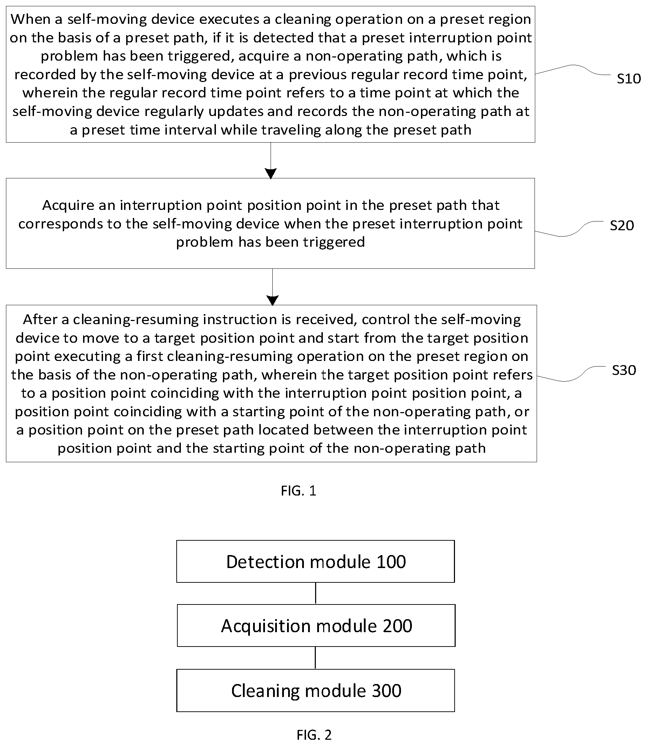

In an embodiment, as shown in FIG. 1, a method for resuming cleaning from an interruption point is provided, which is applicable to a self-moving device and includes the following steps:
S10, when a self-moving device executes a cleaning operation on a preset region on the basis of a preset path, if it is detected that a preset interruption point problem has been triggered, a non-operating path, which is recorded by the self-moving device at a previous regular record time point, is acquired, wherein the regular record time point refers to a time point at which the self-moving device regularly updates and records the non-operating path at a preset time interval while traveling along the preset path.

In an embodiment, the self-moving device is a grass-cutting device, which is used for cutting grass on a lawn within a preset region. It should be noted that the grass-cutting device includes at least one blade disc used for cutting grass, and at this time, the cleaning operation and the first cleaning-resuming operation, the second cleaning-resuming operation, the third cleaning-resuming operation, the fourth cleaning-resuming operation, the fifth cleaning-resuming operation, etc., mentioned later are all grass-cutting operations.

In an embodiment, the self-moving device is a snow-clearing device. It should be noted that the snow-clearing device includes a snow-rolling motor and its corresponding snow shovel, a snow-rolling blade is provided in the snow shovel, and the snow-rolling motor drives the snow shovel to clear snow. At this time, the cleaning operation, the first cleaning-resuming operation, the second cleaning-resuming operation, the third cleaning-resuming operation, the fourth cleaning-resuming operation, and the fifth cleaning-resuming operation are all snow-clearing operations.

The preset region refers to a region that is pre-divided and needs to be cleaned by the self-moving device, and its specific size can be set according to requirements. The preset path is a path with high efficiency and a short travel path that is pre-planned for this cleaning operation before cleaning the preset region. For example, when the self-moving device is a snow-clearing device, since the snow-clearing device clears snow according to the level of potential energy, the level of potential energy refers to the distance between the snow-clearing device and the snow-throwing position (the farther the distance, the greater the potential energy for throwing snow) and the direction (the more deviated the direction of the snow-clearing device relative to the snow-throwing position, the greater the potential energy for throwing snow). Therefore, the preset path is planned from a high-potential energy region to a low-potential energy region, that is, it is preferable to plan the preset path to perform snow-throwing processing from the high-potential energy region to the low-potential energy region. When there are multiple sub-regions in one preset region, the snow needs to be first thrown from one sub-region to another sub-region, and then the snow is thrown from the last sub-region to the snow-throwing position. In this process, the preset path needs to be planned according to the relationship between the sub-regions and the snow-throwing position, specifically, the preset path is planned to first throw snow from the sub-region farther from the snow-throwing position to the sub-region closer to the snow-throwing position, thereby controlling the snow-clearing device to travel to the sub-region closer to the snow-throwing position, and controlling the snow-clearing device to perform snow-throwing processing from the sub-region closer to the snow-throwing position to the snow-throwing position (that is, the preset path first passes through the sub-region farther from the snow-throwing position, and then passes through the sub-region closer to the snow-throwing position).

Understandably, the preset path is recorded in an electronic map in advance, thereby facilitating retrieval or display during the cleaning operation. The starting point and end point of the preset path are set at opposite ends of the preset path. The self-moving device triggers and starts the cleaning operation from the starting point of the preset path, and will end the cleaning operation at the end point of the preset path under continuous normal operation. During the cleaning operation of the self-moving device according to the preset path, regular record time points are set at a preset time interval. Accordingly, at each of the above-mentioned regular record time points, the non-operating path is updated correspondingly, wherein the non-operating path belongs to a section of the preset path near the end point, the end point of the non-operating path coincides with the end point of the preset path, and the starting point of the non-operating path is located between the starting point and the end point of the preset path (or may coincide with the starting point or the end point of the preset path).

Understandably, the regular record time point refers to a time point at which the self-moving device regularly updates and records the non-operating path at a preset time interval (the preset time interval is set according to requirements, for example, set to 2s) while traveling according to the preset path (that is, during the cleaning operation, the non-operating path is updated and recorded every preset time interval. Specifically, the updated non-operating path is written into a preset json file for recording at every preset time interval). The non-operating path in this embodiment refers to a path segment in the preset path recorded at the previous regular record time point that has not yet been cleaned during the cleaning operation.

S20, an interruption point position point in the preset path that corresponds to the self-moving device when the preset interruption point problem has been triggered is acquired. The interruption point position point refers to the real-time position point on the preset path where the self-moving device is located when a preset interruption point problem occurs. The interruption point position point can be acquired in real-time through a positioning device installed thereon during the travel of the self-moving device. The preset interruption point problem includes but is not limited to power failure, malfunction, returning to the charging station due to low battery level, etc. The aforementioned preset interruption point problem can be judged by the self-moving device itself whether it is triggered, and the judgment method is not limited. For example, it can be determined to trigger the preset interruption point problem after confirming that the self-moving device has not advanced within a preset duration, or it can be determined to trigger the preset interruption point problem after confirming that the battery level of the self-moving device is lower than a preset battery level threshold.

S30, after a cleaning-resuming instruction is received, the self-moving device is controlled to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path. The cleaning-resuming instruction is generated when the self-moving device resumes work and confirms to start continuing to clean the preset region (it can be generated after a preset button on the self-moving device is triggered after the self-moving device resumes work, or after a preset trigger switch on a smart terminal communicatively connected to the self-moving device is triggered), or is generated when the self-moving device is charged at a charging station and confirms to start continuing to clean the preset region. In this embodiment, there are the following possibilities for the target position point: first, the target position point coincides with the interruption point position point; second, the target position point coincides with the starting point of the non-operating path, or the target position point is located between the interruption point position point and the starting point of the non-operating path on the preset path. At this time, the target position point is located in front of the interruption point position point (in this application, front and back are all set according to the order of execution of the cleaning operation on the preset path; that is, a position point on the preset path where the cleaning operation needs to be performed earlier is more forward, while a position point where the cleaning operation is performed relatively later is more backward). Thus, during the process of the self-moving device executing the first cleaning-resuming operation on the preset region on the basis of the non-operating path starting from the target position point, it necessarily starts from a position where the cleaning operation has already been performed, avoiding missed cleaning of the preset region and improving the cleaning effect. Meanwhile, the starting point of the non-operating path coincides with or is located in front of the target position point. Therefore, when the self-moving device executes the first cleaning-resuming operation on the preset region on the basis of the non-operating path starting from the target position point, it will not start from a position that is too far forward (the forwardmost position will only coincide with the starting point of the non-operating path of the last timed update), thus avoiding excessive repeated cleaning, improving cleaning efficiency, and saving cleaning time.

In the method for resuming cleaning from an interruption point of the above-mentioned embodiments of the present application, the non-operating path is recorded at a preset time interval, and when a preset interruption point problem is triggered, the interruption point position point corresponding to the preset path when the preset interruption point problem is triggered is determined in real-time. Afterwards, the target position point can be determined according to the interruption point position point and the non-operating path, and then a first cleaning-resuming operation is executed on the preset region according to the non-operating path on the basis of the target position point, avoiding repeated cleaning of the preset region during the cleaning-resuming operation (such as the first cleaning-resuming operation), and there will be no missed regions, which improves the intelligence level of the cleaning process, saves cleaning time, and also greatly improves cleaning efficiency and effectiveness.

Further, the preset path may include a first path in the preset region and a second path located outside the preset region, and the first path and the second path are connected. The first path refers to a path corresponding to a cleaning operation that requires the self-moving device to enable a cleaning function (for example, a snow-clearing device needs to enable a snow-clearing function to perform a snow-clearing operation, and a grass-cutting device needs to enable a grass-cutting function to perform a grass-cutting operation), while the second path is merely a necessary path for route planning, that is, a path from the starting point of the preset path (such as a charging station) to a boundary position of the preset region, and in the second path, the cleaning function does not need to be enabled. Understandably, if, as described in step S10, the self-moving device executes a cleaning operation on the preset region in the first path and detects that a preset interruption point problem is triggered, then it is necessary to acquire the non-operating path recorded by the self-moving device at the previous regular record time point and proceed to step S20 to acquire the interruption point position point, and then proceed to the next operation in step S30. If the self-moving device detects that a preset interruption point problem is triggered in the second path, then it is not necessary to record the interruption point position point, and the entire first path is recorded as a remaining work path, and the intersection of the first path and the second path is recorded as a resumption work cleaning position point. Afterwards, after receiving a cleaning-resuming instruction, the self-moving device is controlled to move to the resumption work cleaning position point, and a third cleaning-resuming operation is executed on the preset region from the resumption work cleaning position point according to the remaining work path.

In an embodiment, the non-operating path includes a preset moving direction and a preset moving route. That is, when recording the non-operating path, the preset moving direction and the preset moving route in the non-operating path need to be recorded simultaneously, so that when the self-moving device resumes work to perform the first cleaning-resuming operation (the preset moving direction and the preset moving route can also be referenced and used in other cleaning-resuming operations), it can move directly along the preset moving route in the preset moving direction, avoiding problems such as directional deviation. Further, the step S30 that the self-moving device is controlled to move to the target position point and start from the target position point executing the first cleaning-resuming operation on the preset region on the basis of the non-operating path includes:
the self-moving device is controlled to move to a target position point, a motion direction of the self-moving device is adjusted on the basis of the preset moving direction, and from the target position point, the first cleaning-resuming operation is executed on the preset region on the basis of the preset moving route. That is, after the self-moving device resumes work and receives the cleaning-resuming instruction, if the self-moving device has been controlled to move to the target position point, at this time, since the target position point is necessarily located on the non-operating path (the non-operating path belongs to a part of the preset path, and the target position point is located on or before the interruption point position point on the preset path, and is located on or after the starting point of the non-operating path), therefore, the moving direction of the self-moving device can be adjusted in real-time according to the preset moving direction recorded in the non-operating path, so that the motion direction of the self-moving device always matches the preset moving direction corresponding to the non-operating path during the first cleaning-resuming operation (that is, the motion direction of the self-moving device is adjusted in real-time according to the preset moving direction, so that the traveling direction of the self-moving device matches the turning direction of the non-operating path), and then it can travel directly along the preset moving route, avoiding problems such as directional deviation.

In an embodiment, the step S30 that the self-moving device is controlled to move to the target position point and start from the target position point executing the first cleaning-resuming operation on the preset region on the basis of the non-operating path includes:
a current position point of the self-moving device in the cleaning-resuming instruction is acquired, and it is confirmed whether the current position point coincides with the interruption point position point. The current position point refers to the real-time position point of the self-moving device when it resumes work and receives the cleaning-resuming instruction. For example, when the self-moving device returns to the charging station for charging due to insufficient battery power and triggers a preset interruption point problem, at this time, when the cleaning-resuming instruction is acquired, the current position point of the self-moving device may be the charging station, or the current position point may also be the position point where the self-moving device restarts after shutdown caused by power failure or malfunction.

When the current position point does not coincide with the interruption point position point, a first optimal moving path is determined on the basis of the current position point, the target position point, and the non-operating path. That is, when the current position point does not coincide with the interruption point position point, it is necessary to first plan a first optimal moving path for cleaning the non-operating path from the current position point via the target position point. The planning of the first optimal moving path is mainly for the planning of the preceding path from the current position point to the target position point (which can be set according to distance or time), and the subsequent path starting from the target position point can be directly set according to the non-operating path (since the target position point is located on the non-operating path, the subsequent path starting from the target position point is preferably coincident with the non-operating path). Understandably, when the current position point coincides with the interruption point position point, the self-moving device is directly controlled to perform a fourth cleaning-resuming operation on the preset region from the current position point via the target position point according to the non-operating path.

The self-moving device is controlled to move from the current position point to the target position point along the first optimal moving path and then start from the target position point executing the first cleaning-resuming operation on the preset region along the first optimal moving path. That is, in this embodiment, after arriving at the target position point from the current position along the first optimal moving path, the first cleaning-resuming operation is executed on the preset region according to the first optimal moving path, which enables the self-moving device to reach the target position point at the fastest speed and continue cleaning the preset region, improving cleaning efficiency.

In an embodiment, the step S30 that the self-moving device is controlled to move to the target position point includes:
S301, a current position point of the self-moving device in the cleaning-resuming instruction is acquired, the self-moving device is controlled to move from the current position point to a redundant starting point, and then the self-moving device is controlled to move from the redundant starting point to the target position point along the preset path and execute a second cleaning-resuming operation on the preset region during the movement, wherein the redundant starting point is set on the preset path, and the redundant starting point is located on a side of the target position point close to a starting point of the preset path. The current position point refers to the real-time position point of the self-moving device when it resumes work and receives the cleaning-resuming instruction. For example, when the self-moving device returns to the charging station for charging due to insufficient battery power and triggers a preset interruption point problem, at this time, when the cleaning-resuming instruction is acquired, the current position point of the self-moving device may be the charging station, or the current position point may also be the position point where the self-moving device restarts after shutdown caused by power failure or malfunction.

Understandably, the redundant starting point refers to a position point located before the target position point on the preset path (the redundant starting point is equivalent to a position point previously traversed by the self-moving device). The redundant starting point can be set according to requirements. For example, it can be set at a preset distance before the target position point on the preset path. The preset distance can be set directly as a length (for example, 1 meter), or can be set according to the working duration of the self-moving device, for example, setting the preset distance as the length corresponding to the self-moving device working for 2 seconds under preset cleaning parameters.

Understandably, since the target position point may be close to or even coincide with the interruption point position point corresponding to the triggered preset interruption point problem, therefore, if the self-moving device starts working directly from a position close to or coinciding with the interruption point position point, at this time, due to the self-moving device's own positioning error, if the self-moving device, when positioning the target position point, travels to a position that has not been cleaned due to the positioning error, there will be a partially missed cleaning region between this position and the interruption point position point, thus resulting in poor cleaning effectiveness. Therefore, to avoid the problem of missed cleaning, in this embodiment, the aforementioned redundant starting point is set (at a preset distance before the target position point, that is, before the interruption point position point), and is set after receiving the cleaning-resuming instruction, the self-moving device is first controlled to move from the current position point to the redundant starting point, and then the self-moving device is controlled to perform a second cleaning-resuming operation on the preset region corresponding to the preset path between the redundant starting point and the target position point, thereby avoiding the occurrence of missed cleaning and improving the cleaning effect.

Furthermore, the step S301 that the self-moving device is controlled to move from the redundant starting point to the target position point along the preset path includes:
it is determined whether the redundant starting point is a turning point on the preset path. That is, the redundant starting point may be located at a turning point on the preset path, where a turning point refers to a position point on the preset path where a sharp turn occurs, and the self-moving device located at the turning point on the preset path needs to adjust its motion direction to continue performing the cleaning operation.

When the redundant starting point is a turning point, a turning direction corresponding to the redundant starting point is acquired, and after adjusting the motion direction of the self-moving device on the basis of the turning direction, the self-moving device is controlled to move from the redundant starting point to the target position point along the preset path. That is, when the redundant starting point is a turning point, in order to prevent the self-moving device from being unable to quickly determine its travel direction (if the self-moving device performs a turning movement after activating the cleaning function at the turning point, it will not only affect work efficiency but also increase power consumption), the turning direction corresponding to the redundant starting point in the preset path will be determined first, and after adjusting the motion direction of the self-moving device according to the turning direction, the self-moving device is then controlled to perform the second cleaning-resuming operation between the redundant starting point and the target position point, thereby improving the cleaning efficiency of the self-moving device and reducing power consumption. Understandably, when the redundant starting point is not a turning point, the self-moving device is directly controlled to move from the redundant starting point along the preset path to the target position point, and to perform the second cleaning-resuming operation on the preset region during the movement.

Further, the step S301 that the self-moving device is controlled to move from the current position point to the redundant starting point, and then the self-moving device is controlled to move from the redundant starting point to the target position point along the preset path and execute the second cleaning-resuming operation on the preset region during the movement, further includes:
it is confirmed whether the current position point coincides with the interruption point position point. The current position point refers to the real-time position point of the self-moving device when it resumes work and receives the cleaning-resuming instruction. For example, when the self-moving device returns to the charging station for charging due to insufficient battery power and triggers a preset interruption point problem, at this time, when the cleaning-resuming instruction is acquired, the current position point of the self-moving device may be the charging station.

When the current position point does not coincide with the interruption point position point, a second optimal moving path is determined on the basis of the current position point, the redundant starting point, the target position point, and the non-operating path. That is, when the current position point does not coincide with the interruption point position point, it is necessary to first plan a second optimal moving path that sequentially passes through the redundant starting point and the target position point from the current position point to clean the non-operating path. The planning of the second optimal moving path is mainly for the planning of the preceding path from the current position point to the target position point via the redundant starting point (which can be set according to distance or time), and the subsequent path starting from the target position point can be directly set according to the non-operating path (since the target position point is located on the non-operating path, the subsequent path starting from the target position point is preferably coincident with the non-operating path). Understandably, when the current position point coincides with the interruption point position point, the self-moving device is directly controlled to perform a fifth cleaning-resuming operation on the preset region, starting from the current position point and sequentially passing through the redundant starting point and the target position point, according to the non-operating path.

The self-moving device is controlled to move to the redundant starting point along the second optimal moving path, and then the self-moving device is controlled to move from the redundant starting point to the target position point along the second optimal moving path and execute the second cleaning-resuming operation on the preset region during the movement. That is, in this embodiment, after the self-moving device arrives at the redundant starting point from the current position along the second optimal moving path, the second cleaning-resuming operation is executed on the preset region according to the second optimal moving path, which enables the self-moving device to reach the redundant position point at the fastest speed and continue cleaning the preset region located between the redundant starting point and the target position point, thus improving cleaning efficiency.

Further, the step S30 that from the target position point, the first cleaning-resuming operation is executed on the preset region on the basis of the non-operating path includes: the self-moving device is controlled to start from the target position point executing the first cleaning-resuming operation on the preset region along the second optimal moving path. That is, in this embodiment, after continuing to clean the preset region located between the redundant starting point and the target position point according to the second optimal moving path, it is also necessary to continue to perform the first cleaning-resuming operation on the preset region using the second optimal moving path, wherein the path of the second optimal movement path after the target position point is preferably coincident with the non-operating path.

It should be understood that the sequence numbers of the steps in the above-mentioned embodiments do not imply the order of execution; the execution order of each process should be determined by its function and internal logic, and should not constitute any limitation on the implementation process of the embodiments of this application.

In one embodiment, as shown in FIG. 2, an apparatus for resuming cleaning from an interruption point is provided, and the apparatus corresponds one-to-one with the method for resuming cleaning from an interruption point in the above-mentioned embodiments. The apparatus for resuming cleaning from an interruption point includes:
a detection module 100, configured to, when a self-moving device executes a cleaning operation on a preset region on the basis of a preset path, if it is detected that a preset interruption point problem has been triggered, acquire a non-operating path, which is recorded by the self-moving device at a previous regular record time point, wherein the regular record time point refers to a time point at which the self-moving device regularly updates and records the non-operating path at a preset time interval while traveling along the preset path;
an acquisition module 200, configured to acquire an interruption point position point in the preset path that corresponds to the self-moving device when the preset interruption point problem has been triggered; and
a cleaning module 300, configured to, after a cleaning-resuming instruction is received, control the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

With regard to the apparatus for resuming cleaning from an interruption point of this application, the non-operating path is regularly recorded at a preset time interval, and when a preset interruption point problem is triggered, a corresponding interruption point position point in the preset path when the preset interruption point problem has been triggered is determined in real time. Afterwards, a target position point can be determined on the basis of the interruption point position point and the non-operating path, and then a first cleaning-resuming operation is executed on a preset region on the basis of the target position point and according to the non-operating path. This avoids repeated cleaning of the preset region during the cleaning-resuming operation (such as the first cleaning-resuming operation), and there will be no missed regions, which improves the intelligence of the cleaning process, saves cleaning time, and also greatly improves cleaning efficiency and effectiveness.

Regarding the specific limitations of the apparatus for resuming cleaning from an interruption point, reference can be made to the limitations of the method for resuming cleaning from an interruption point described above, which will not be repeated here. Each module in the aforementioned the apparatus for resuming cleaning from an interruption point can be implemented in whole or in part through software, hardware, or a combination thereof. The aforementioned modules can be embedded in a processor of a computer device in hardware form or be independent of it, or can be stored in a memory of the computer device in software form, so that the processor calls and executes the operations corresponding to each module.

In one embodiment, a self-moving device is provided, including a traveling device, a cleaning device, and a controller. The controller includes a memory, a processor, and computer-readable instructions stored in the memory and executable on the processor. When the processor executes the computer-readable instructions, it controls the traveling device and the cleaning device to implement the aforementioned method for resuming cleaning from an interruption point.

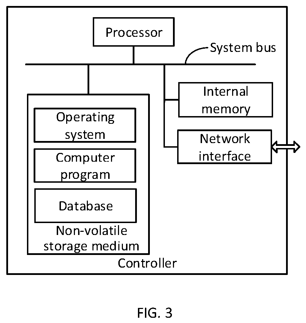

The internal structure diagram of the aforementioned controller can be as shown in FIG. 3. The controller includes a processor, a memory, a network interface, and a database connected by a system bus. The processor of the controller is configured to provide computing and control capabilities. The memory of the controller includes a non-volatile storage medium and an internal memory. The non-volatile storage medium stores an operating system, computer-readable instructions, and a database. The internal memory provides an environment for the operation of the operating system and computer-readable instructions in the non-volatile storage medium. When the computer-readable instructions are executed by the processor, the aforementioned method for resuming cleaning from an interruption point is implemented.

In one embodiment, the self-moving device is a grass-cutting device, which is used for cutting grass on a lawn within a preset region (at this time, the cleaning operation, the first cleaning-resuming operation, and the second cleaning-resuming operation are all grass-cutting operations).

In one embodiment, the self-moving device is a snow-clearing device. It should be noted that the snow-clearing device includes a snow-rolling motor and its corresponding snow shovel, a snow-rolling blade is provided in the snow shovel, and the snow-rolling motor drives the snow shovel to clear snow (at this time, the cleaning operation, the first cleaning-resuming operation, and the second cleaning-resuming operation are all snow-clearing operations).

Regarding the specific limitations of the controller, reference can be made to the limitations of the method for resuming cleaning from an interruption point described above, which will not be repeated here. Each module in the aforementioned controller can be implemented in whole or in part through software, hardware, or a combination thereof. The aforementioned modules can be embedded in a processor of the controller in hardware form or be independent of it, or can be stored in a memory of the controller in software form, so that the processor calls and executes the operations corresponding to each module.

In one embodiment, one or more readable storage media storing computer-readable instructions are provided. The readable storage media provided in this embodiment include non-volatile readable storage media and volatile readable storage media; the readable storage media store computer-readable instructions, and when the computer-readable instructions are executed by one or more processors, they cause the one or more processors to implement the steps of the aforementioned method for resuming cleaning from an interruption point.

Those of ordinary skill in the art can understand that all or part of the processes in the methods of the aforementioned embodiments can be implemented by instructing relevant hardware through computer-readable instructions. The computer-readable instructions can be stored in a non-volatile computer-readable storage medium or a volatile readable storage medium. When executed, the computer-readable instructions can include the processes of the embodiments of the aforementioned methods. Any reference to a memory, a storage, a database, or other medium used in the embodiments provided by this application can include a non-volatile and/or volatile memory. The non-volatile memory can include Read-Only Memory (ROM), Programmable ROM (PROM), Erasable Programmable ROM (EPROM), Electrically Erasable Programmable ROM (EEPROM), or flash memory. The volatile memory can include Random Access Memory (RAM) or external cache memory. By way of illustration and not limitation, RAM is available in many forms, such as Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM), Rambus Direct RAM (RDRAM), Direct Rambus Dynamic RAM (DRDRAM), and Rambus Dynamic RAM (RDRAM), etc.

Those skilled in the art can clearly understand that, for the convenience and brevity of description, the division of the functional units or modules is only used as an example. In practical applications, the functions can be assigned to different functional units or modules as needed, that is, the internal structure of the device is divided into different functional units or modules to complete all or part of the functions described above.

The embodiments described above are only used to illustrate the technical solutions of this application, not to limit them. Although this application has been described in detail with reference to the foregoing embodiments, those of ordinary skill in the art should understand that they can still modify the technical solutions described in the foregoing embodiments, or equivalently replace some of the technical features. These modifications or replacements do not cause the essence of the corresponding technical solutions to depart from the spirit and scope of the technical solutions of the embodiments of this application, and should all be included within the protection scope of this application.

## Claims

1. A method for resuming cleaning from an interruption point, comprising:
when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path;
acquiring an interruption point position point in the preset path that corresponds to the self-moving device when the preset interruption point problem has been triggered; and
after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

2. The method for resuming cleaning from an interruption point according to claim 1, wherein the non-operating path comprises a preset moving direction and a preset moving route;
controlling the self-moving device to move to the target position point and start from the target position point executing the first cleaning-resuming operation on the preset region on the basis of the non-operating path comprises:
controlling the self-moving device to move to a target position point, adjusting a motion direction of the self-moving device on the basis of the preset moving direction, and starting from the target position point executing the first cleaning-resuming operation on the preset region on the basis of the preset moving route.

3. The method for resuming cleaning from an interruption point according to claim 1, wherein controlling the self-moving device to move to the target position point and start from the target position point executing the first cleaning-resuming operation on the preset region on the basis of the non-operating path comprises:
acquiring a current position point of the self-moving device in the cleaning-resuming instruction, and confirming whether the current position point coincides with the interruption point position point;
when the current position point does not coincide with the interruption point position point, determining a first optimal moving path on the basis of the current position point, the target position point, and the non-operating path; and
controlling the self-moving device to move from the current position point to the target position point along the first optimal moving path and then start from the target position point executing the first cleaning-resuming operation on the preset region along the first optimal moving path.

4. The method for resuming cleaning from an interruption point according to claim 1, wherein controlling the self-moving device to move to the target position point comprises:
acquiring a current position point of the self-moving device in the cleaning-resuming instruction, controlling the self-moving device to move from the current position point to a redundant starting point, and then controlling the self-moving device to move from the redundant starting point to the target position point along the preset path and execute a second cleaning-resuming operation on the preset region during the movement, wherein the redundant starting point is set on the preset path, and the redundant starting point is located on a side of the target position point close to a starting point of the preset path.

5. The method for resuming cleaning from an interruption point according to claim 4, wherein controlling the self-moving device to move from the redundant starting point to the target position point along the preset path comprises:
determining whether the redundant starting point is a turning point on the preset path; and
when the redundant starting point is a turning point, acquiring a turning direction corresponding to the redundant starting point, and after adjusting the moving direction of the self-moving device on the basis of the turning direction, controlling the self-moving device to move from the redundant starting point to the target position point along the preset path.

6. The method for resuming cleaning from an interruption point according to claim 5, wherein, after determining whether the redundant starting point is a turning point on the preset path, the method further comprises:
when the redundant starting point is not a turning point, controlling the self-moving device to move from the redundant starting point to the target position point along the preset path and execute the second cleaning-resuming operation on the preset region during the movement.

7. The method for resuming cleaning from an interruption point according to claim 4, wherein controlling the self-moving device to move from the current position point to the redundant starting point, and then controlling the self-moving device to move from the redundant starting point to the target position point along the preset path and execute the second cleaning-resuming operation on the preset region during the movement, further comprises:
confirming whether the current position point coincides with the interruption point position point;
when the current position point does not coincide with the interruption point position point, determining a second optimal moving path on the basis of the current position point, the redundant starting point, the target position point, and the non-operating path; and
controlling the self-moving device to move to the redundant starting point along the second optimal moving path, and then controlling the self-moving device to move from the redundant starting point to the target position point along the second optimal moving path and execute the second cleaning-resuming operation on the preset region during the movement; and
starting from the target position point executing the first cleaning-resuming operation on the preset region on the basis of the non-operating path comprises:
controlling the self-moving device to start from the target position point executing the first cleaning-resuming operation on the preset region along the second optimal moving path.

8. A self-moving device, comprising a traveling device, a cleaning device, and a controller, the controller comprising a memory, a processor, and computer-readable instructions stored in the memory and executable on the processor, wherein when the processor executes the computer-readable instructions, the processor controls the traveling device and the cleaning device to implement the following steps:
when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path;
acquiring an interruption point position point in the preset path that corresponds to the self-moving device when the preset interruption point problem has been triggered; and
after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

9. The self-moving device according to claim 8, wherein the non-operating path comprises a preset moving direction and a preset moving route;
controlling the self-moving device to move to the target position point and start from the target position point executing the first cleaning-resuming operation on the preset region on the basis of the non-operating path comprises:
controlling the self-moving device to move to the target position point, adjusting a motion direction of the self-moving device on the basis of the preset moving direction, and starting from the target position point executing the first cleaning-resuming operation on the preset region on the basis of the preset moving route.

10. The self-moving device according to claim 8, wherein controlling the self-moving device to move to the target position point and start from the target position point executing the first cleaning-resuming operation on the preset region on the basis of the non-operating path comprises:
acquiring a current position point of the self-moving device in the cleaning-resuming instruction, and confirming whether the current position point coincides with the interruption point position point;
when the current position point does not coincide with the interruption point position point, determining a first optimal moving path on the basis of the current position point, the target position point, and the non-operating path; and
controlling the self-moving device to move from the current position point to the target position point along the first optimal moving path and then start from the target position point executing the first cleaning-resuming operation on the preset region along the first optimal moving path.

11. The self-moving device according to claim 8, wherein controlling the self-moving device to move to the target position point comprises:
acquiring a current position point of the self-moving device in the cleaning-resuming instruction, controlling the self-moving device to move from the current position point to a redundant starting point, and then controlling the self-moving device to move from the redundant starting point to the target position point along the preset path and execute a second cleaning-resuming operation on the preset region during the movement, wherein the redundant starting point is set on the preset path, and the redundant starting point is located on a side of the target position point close to a starting point of the preset path.

12. The self-moving device according to claim 11, wherein controlling the self-moving device to move from the redundant starting point to the target position point along the preset path comprises:
determining whether the redundant starting point is a turning point on the preset path; and
when the redundant starting point is a turning point, acquiring a turning direction corresponding to the redundant starting point, and after adjusting the moving direction of the self-moving device on the basis of the turning direction, controlling the self-moving device to move from the redundant starting point to the target position point along the preset path.

13. The self-moving device according to claim 11, wherein controlling the self-moving device to move from the current position point to the redundant starting point, and then controlling the self-moving device to move from the redundant starting point to the target position point along the preset path and execute the second cleaning-resuming operation on the preset region during the movement, further comprises:
confirming whether the current position point coincides with the interruption point position point;
when the current position point does not coincide with the interruption point position point, determining a second optimal moving path on the basis of the current position point, the redundant starting point, the target position point, and the non-operating path; and
controlling the self-moving device to move to the redundant starting point along the second optimal moving path, and then controlling the self-moving device to move from the redundant starting point to the target position point along the second optimal moving path and execute the second cleaning-resuming operation on the preset region during the movement; and
starting from the target position point executing the first cleaning-resuming operation on the preset region on the basis of the non-operating path comprises:
controlling the self-moving device to start from the target position point executing the first cleaning-resuming operation on the preset region along the second optimal moving path.

14. The self-moving device according to claim 8, wherein the cleaning device is a snow-clearing device, a grass-cutting device, or a leaf-blowing device.

15. One or more readable storage media storing computer-readable instructions, wherein, when the computer-readable instructions are executed by one or more processors, the one or more processors implement the following steps:
when a self-moving device executes a cleaning operation on a preset region on the basis of a preset path, if it is detected that a preset interruption point problem has been triggered, acquiring a non-operating path, which is recorded by the self-moving device at a previous regular record time point, wherein the regular record time point refers to a time point at which the self-moving device regularly updates and records the non-operating path at a preset time interval while traveling along the preset path;
acquiring an interruption point position point in the preset path that corresponds to the self-moving device when the preset interruption point problem has been triggered; and
after a cleaning-resuming instruction is received, controlling the self-moving device to move to a target position point and start from the target position point executing a first cleaning-resuming operation on the preset region on the basis of the non-operating path, wherein the target position point refers to a position point coinciding with the interruption point position point, a position point coinciding with a starting point of the non-operating path, or a position point on the preset path located between the interruption point position point and the starting point of the non-operating path.

16. The readable storage medium according to claim 15, wherein the non-operating path comprises a preset moving direction and a preset moving route;
controlling the self-moving device to move to the target position point and start from the target position point executing the first cleaning-resuming operation on the preset region on the basis of the non-operating path comprises:
controlling the self-moving device to move to a target position point, adjusting a motion direction of the self-moving device on the basis of the preset moving direction, and starting from the target position point executing the first cleaning-resuming operation on the preset region on the basis of the preset moving route.

17. The readable storage medium according to claim 15, wherein controlling the self-moving device to move to the target position point and start from the target position point executing the first cleaning-resuming operation on the preset region on the basis of the non-operating path comprises:
acquiring a current position point of the self-moving device in the cleaning-resuming instruction, and confirming whether the current position point coincides with the interruption point position point;
when the current position point does not coincide with the interruption point position point, determining a first optimal moving path on the basis of the current position point, the target position point, and the non-operating path; and
controlling the self-moving device to move from the current position point to the target position point along the first optimal moving path and then start from the target position point executing the first cleaning-resuming operation on the preset region along the first optimal moving path.

18. The readable storage medium according to claim 15, wherein controlling the self-moving device to move to the target position point comprises:
acquiring a current position point of the self-moving device in the cleaning-resuming instruction, controlling the self-moving device to move from the current position point to a redundant starting point, and then controlling the self-moving device to move from the redundant starting point to the target position point along the preset path and execute a second cleaning-resuming operation on the preset region during the movement, wherein the redundant starting point is set on the preset path, and the redundant starting point is located on a side of the target position point close to a starting point of the preset path.

19. The readable storage medium according to claim 18, wherein controlling the self-moving device to move from the redundant starting point to the target position point along the preset path comprises:
determining whether the redundant starting point is a turning point on the preset path; and
when the redundant starting point is a turning point, acquiring a turning direction corresponding to the redundant starting point, and after adjusting the moving direction of the self-moving device on the basis of the turning direction, controlling the self-moving device to move from the redundant starting point to the target position point along the preset path.

20. The readable storage media according to claim 18, wherein controlling the self-moving device to move from the current position point to the redundant starting point, and then controlling the self-moving device to move from the redundant starting point to the target position point along the preset path and execute the second cleaning-resuming operation on the preset region during the movement, further comprises:
confirming whether the current position point coincides with the interruption point position point;
when the current position point does not coincide with the interruption point position point, determining a second optimal moving path on the basis of the current position point, the redundant starting point, the target position point, and the non-operating path; and
controlling the self-moving device to move to the redundant starting point along the second optimal moving path, and then controlling the self-moving device to move from the redundant starting point to the target position point along the second optimal moving path and execute the second cleaning-resuming operation on the preset region during the movement; and
starting from the target position point executing the first cleaning-resuming operation on the preset region on the basis of the non-operating path comprises:
controlling the self-moving device to start from the target position point executing the first cleaning-resuming operation on the preset region along the second optimal moving path.
